# EUROPÄISCHE PATENTSCHRIFT

(11) **EP 0 926 500 B1**
(45) Veröffentlichungstag und Bekanntmachung des Hinweises auf die Patenterteilung: **29.05.2002**
(21) Anmeldenummer: 98890357.1
(22) Anmeldetag: 03.12.1998
(51) Int. Cl.: G01N 35/10, B67B 7/92, B01L 11/00

(54) **Vorrichtung zur Entnahme einer Flüssigkeit aus einer Glasampulle**
Device for withdrawing a liquid from a glass ampoule
Dispositif pour extraire un liquide d'une ampoule en verre

(30) Priorität: 22.12.1997 AT 216997
(43) Veröffentlichungstag der Anmeldung: 30.06.1999
(73) Patentinhaber: F.HOFFMANN-LA ROCHE AG, 4070 Basel (CH)
(72) Erfinder: Rüther, Horst, Dipl.-Ing. Dr., 8047 Hart/Graz (AT); List, Helmut, Prof. Dipl.-Ing., 8010 Graz (AT); Kirchmayer, Gerald, Dipl.-Ing., 8042 Graz (AT)
(74) Vertreter: Babeluk, Michael, Dipl.-Ing. Mag.

(56) Entgegenhaltungen:
- DE-A- 3 130 247
- US-A- 4 265 372
- US-A- 4 506 817
- US-A- 5 496 523

## Beschreibung

Die Erfindung betrifft eine Vorrichtung zur automatischen Entnahme einer Flüssigkeit aus einer verschlossenen Glasampulle, wobei eine Halterung vorgesehen ist, in welcher die verschlossene Glasampulle angeordnet ist, wobei ein auf den Kopf oder Hals der Ampulle einen seitlichen Druck oder Schlag ausübendes Element vorgesehen ist, welches den Kopf der Ampulle im Halsbereich bricht.

Insbesondere in medizinischen Labors sowie in Arztpraxen und Kliniken müssen eine Vielzahl von Glasampullen mit unterschiedlichem Inhalt, wie Arzneimittel, Kalibrier- oder Qualitätskontrollflüssigkeiten gehandhabt werden, wobei die Glasampullen zur Entnahme ihres Inhaltes meist händisch aufgebrochen und ihrer Bestimmung zugeführt werden.

Für eine Reihe von Anwendungen, insbesondere bei der Qualtitätskontrolle oder Kalibrierung von Laborgeräten durch Qualitätskontrollflüssigkeiten bzw. Kalibriermedien ist der manuelle Aufwand bei der Zuführung derartiger Flüssigkeiten aus Glasampullen von Nachteil. Bei Verwendung anderer Lagerbehälter, wie Beutel oder Kunststoffflaschen zur Aufnahme dieser Flüssigkeiten können sich die Gaspartialdrücke bzw. der pH-Wert der Flüssigkeiten bei längerer Lagerung ändern, sodass diese für ihre eigentliche Funktion unbrauchbar werden.

In diesem Zusammenhang ist aus der US-A 3,892.237 eine automatische Injektionsvorrichtung bekannt geworden, in welcher eine Glasampulle mit der zu injizierenden Flüssigkeit gehalten wird. Mit einer mechanisch betätigbaren Vorrichtung kann die Spitze der Glasampulle gebrochen werden, wobei deren unter Gasdruck stehender Inhalt in eine verformbare Plastikampulle gelangt. Bei der Injektion des Ampulleninhaltes wird die Plastikampulle durch die Kraft einer vorgespannten Feder verformt und gleichzeitig eine einlumige Nadel bis zu einer einstellbaren Injektionstiefe aus der Injektionsvorrichtung ausgestoßen. Eine derartige Vorrichtung eignet sich allerdings nicht für die automatisierte Anwendung bei Laborgeräten.

Aus der EP-A 0 472 457 ist eine Vorrichtung zum Entleeren von Fläschchen mit toxischem Inhalt bekannt. Die Fläschchen bestehen aus perforablen Materialien, wie beispielsweise Polyethylen, und werden in einer aufrechten, den Boden der wie beispielsweise Polyethylen, und werden in einer aufrechten den Boden der Ampulle nach oben weisenden Stellung in einer Halterung angeordnet. Durch den perforablen Boden wird ein Entnahmeelement eingeführt, welches zwei Kanäle aufweist. Durch einen der Kanäle wird ein unter Druck stehendes Gas in das Fläschchen eingeführt, wobei der elastische Boden des Fläschchens die Einstichstelle abdichtet, sodass sich ein Überdruck im Fläschchen aufbauen kann. Durch einen zweiten Kanal im Entnahmeelement, dessen Öffnung in die Flüssigkeit der Ampulle eintaucht, kann der toxische Inhalt aus dem Fläschchen gepumpt werden. Die genannte Vorrichtung eignet sich nicht für Glasampullen und ist zudem für die Anwendung bei Eich- und Kalibriermedien problematisch, da das in das Fläschchen eingeführte Gas dem Gaspartialdruck in der Flüssigkeit verändern würde.

Weiters sind Vorrichtungen bekannt geworden, bei welchen die Glasampulle im Kopf- oder Bodenbereich aufgebrochen wird, wonach der Inhalt der Ampulle austritt und zur weiteren Verwendung aufgefangen wird. So ist beispielsweise aus der FR-A 721 646 eine Glasampulle mit einem konisch eingezogenen Bodenbereich bekannt, welcher durch ein stiftförmiges Element aufgestoßen werden kann. Der Inhalt des Fläschchens tritt dann nach unten aus.

Eine ähnliche Vorrichtung zeigt auch die US-A 1,680.616, bei welcher der Boden einer Glasampulle durch ein dornartiges Element zerstört wird, wonach der Ampulleninhalt austritt. Es hat sich allerdings gezeigt, dass die aus der Glasampulle austretende Flüssigkeit mit der Umgebungsluft wechselwirkt, sodass die aktuellen Gaspartialdrücke von den Sollwerten abweichen. Durch den Einfluss von CO₂ aus der Umgebungsluft kann sich dabei auch der pH-Wert der Flüssigkeit ändern.

Ein Verfahren sowie eine Vorrichtung zum aseptischen und splitterfreien Öffnen einer geschlossenen Glasampulle zeigt die EP-A 0 079 279, bei welcher ein Ende der Ampulle (entweder der Kopf- oder der Bodenbereich) dem hohen thermischen Fluss einer Gasflamme ausgesetzt wird, wobei in diesem Bereich die Ampulle örtlich aufgeschmolzen wird. Nachteilig bei diesem Verfahren ist der große technische Aufwand sowie die ungünstigen Einwirkungen der Gasflamme auf den Ampulleninhalt.

Eine weitgehend manuell zu bedienende Vorrichtung zum Öffnen einer Glasampulle zeigt die US-A 4,506.817. Die Vorrichtung weist einen hohlzylinderischen Körper auf, in welchen der Kopf einer Glasampulle eingeschoben werden kann. Ein innen vorstehendes Schneideelement ritzt nach einer Drehbewegung des zylindrischen Körpers die Ampulle im Bereich des Halses, wonach der Kopf der Ampulle ohne Verletzungsgefahr abgebrochen werden kann. Über die automatisierte Entnahme der Flüssigkeit aus der Ampulle werden allerdings in diesem Dokument keine Aussagen gemacht.

Schließlich ist aus der US-A 5,179.024 eine Glasampulle bekannt, welche im Halsbereich eine Bruchmarke zum Aufbrechen der Ampulle aufweist. Im Bereich dieser Bruchmarke ist ein elastischer Dichtring angeordnet, wobei durch einen geringen seitwärts ausgeübten Druck der Kopfbereich der Ampulle im Bereich der Bruchmarke abbricht, jedoch von der elastischen Hülle gehalten wird. Durch die elastische Hülle und durch die Bruchstelle kann dann eine Kolbenspritze in das Innere der Ampulle eingeführt werden. Für eine automatisierte Entnahme des Inhaltes aus einer Glasampulle ist allerdings diese Vorrichtung nicht geeignet.

Aufgabe der vorliegenden Erfindung ist es, eine Vorrichtung zur automatischen Entnahme einer Flüssigkeit, insbesondere einer Kalibrier- oder Qualitätskontrollflüssigkeit aus einer verschlossenen Glasampulle vorzuschlagen, wobei der mechanische Aufwand gering gehalten werden soll und eine Änderung der Flüssigkeitsparameter (insbesondere pH-Wert und Gaspartialdrücke) vermieden werden soll.

Erfindungsgemäß wird diese Aufgabe dadurch erfüllt, dass die Glasampulle in der Öffnungs- und Entnahmeposition in einer aufrechten bzw. leicht geneigten, den Kopf der Ampulle nach oben weisenden Stellung angeordnet ist, sowie dass ein in die Glasampulle in einen Bereich zwischen Ampullenboden und Flüssigkeitsoberfläche einführbares Entnahmeelement vorgesehen ist, welches eine Kanüle zum Absaugen der Flüssigkeit aufweist. Es hat sich überraschenderweise gezeigt, dass dann wenn die Flüssigkeit nach dem Öffnen der Ampulle möglichst rasch aus einem Bereich zwischen der Flüssigkeitsoberfläche und dem Ampullenboden entnommen wird, die bei Qualitäts- bzw. Kalibrierflüssigkeiten wichtigen Parameter wie pH-Wert, PO₂ und pCO₂ praktisch nicht durch die an der Oberfläche zutretende Umgebungsluft verändert werden. Da weiters allfällige Feinsplitter aus dem Bruchvorgang entweder durch die Oberflächenspannung der Flüssigkeit an deren Oberfläche schwimmen bzw. zum Boden absinken, ist auch eine splitterfreie Entnahme aus diesem Bereich möglich.

In einer besonders kompakten Ausführungsvariante der Vorrichtung ist die Kanüle zum Absaugen der Flüssigkeit in einem translatorisch in Richtung der Achse der Glasampulle bewegbaren Element geführt, welches eine schräge, seitlich auf den Kopf der Ampulle einwirkende Kontaktfläche aufweist.

Von besonderem Vorteil ist es, wenn sich die Kanüle am translatorisch bewegbaren Element mittels eines Federelementes abstützt, wobei nach Anlage des translatorisch bewegbaren Elementes an einem Anschlag die Kanüle in die Glasampulle einbringbar ist. In dieser Ausführungsvariante kann mit einer einzigen translatorischen Bewegung zuerst der Kopf der Glasampulle abgebrochen werden, wobei nach Anlage des translatorischen Elementes an einem Anschlag die Kanüle unter Überwindung der Rückstellkraft des Federelementes aus dem translatorisch bewegbaren Element austritt und in die Glasampulle eingeführt werden kann.

Um das Ansaugen von Feinsplittern wirkungsvoll zu vermeiden, kann in einer vorteilhaften Ausführungsvariante an der Spitze oder im Lumen der Kanüle ein feinporiges Filter angeordnet sein.

Die Erfindung wird im folgenden anhand von schematischen Zeichnungen näher erläutert. Es zeigen:
- Fig. 1: eine erfindungsgemäße Vorrichtung in einem Axialschnitt vor dem Einführen des Entnahmeelementes,
- Fig. 2: die Vorrichtung gemäß Fig. 1 nach dem Abbrechen des Kopfes der Ampulle,
- Fig. 3: die Vorrichtung nach Fig. 1 nach dem Einführen des Entnahmeelementes in die Glasampulle, sowie
- Fig. 4: eine Ausführungsvariante der Vorrichtung nach Fig. 3.

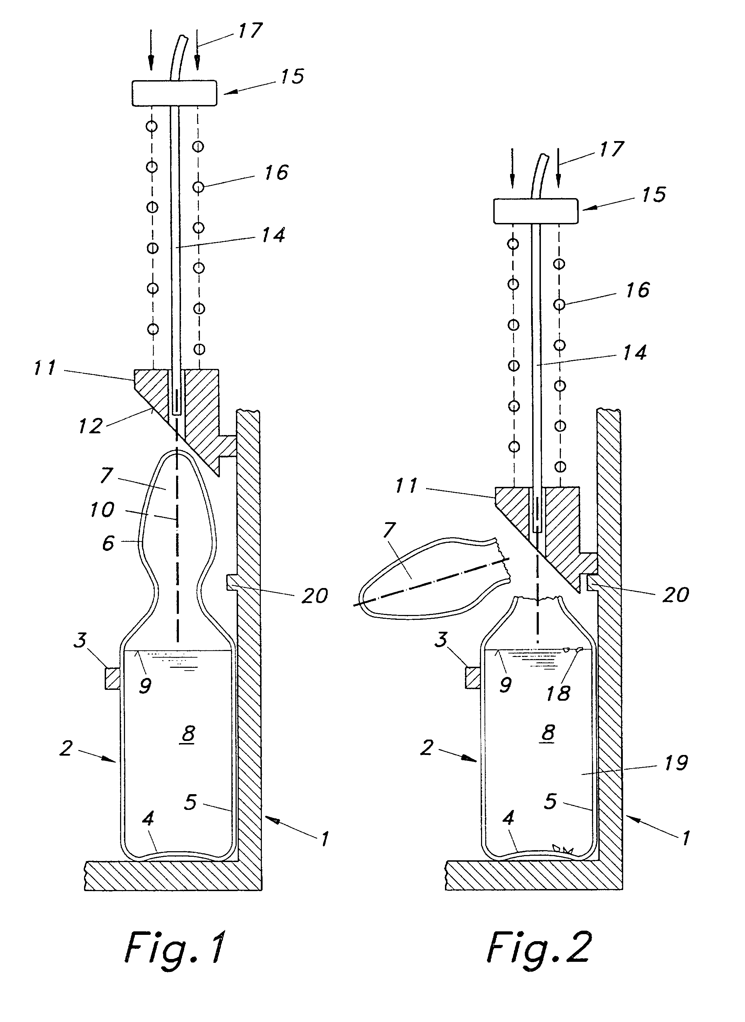

Die in den Figuren 1 bis 3 schematisch dargestellte Vorrichtung weist eine Halterung 1 auf, in welcher eine Glasampulle 2 von einer vorzugsweise elastischen Abstützung 3 gehalten wird. Die aus Boden 4, Schaftbereich 5, Hals 6 und Kopf 7 bestehende Glasampulle 2 beinhaltet eine Flüssigkeit 8 (Kalibrier- oder Qualitätskontrollflüssigkeit bzw. auch Arzneimittel), deren Oberfläche mit 9 bezeichnet ist. Die Glasampulle 2 ist in einer aufrechten, den Kopf 7 nach oben weisenden Stellung angeordnet, könnte aber auch leicht geneigt in einer alternativen Halterung festgehalten werden, solange gewährleistet ist, dass der Hals- und Kopfbereich der Ampulle frei von Flüssigkeit ist. Die Vorrichtung weist ein z. B. elektromotorisch oder pneumatisch in Richtung der Achse 10 der Glasampulle 2 verschiebbares Element 11 auf, welches eine schräge, seitlich auf den Kopf 7 der Ampulle 2 einwirkende Kontaktfläche 12 aufweist. In einer Bohrung 13 des Elementes 11 ist die Kanüle 14 eines in die Glasampulle 2 einführbaren Entnahmeelementes 15 geführt.

Die Kanüle 14 des Entnahmeelementes 15 stützt sich am translatorisch bewegbaren Element 11 mittels eines Federelementes 16 ab, so dass bei Bewegung des Entnahmeelementes 15 entlang der Pfeile 17 zunächst das translatorische Element 11 in Richtung des Kopfes 7 der Glasampulle 2 verschoben wird. Dabei kommt die schräge Kontaktfläche 12 des translatorischen Elementes 11 seitlich mit dem Kopf 7 der Glasampulle 2 in Kontakt, wodurch dieser abgebrochen wird (siehe Fig. 2). Allfällige Feinsplitter 18 schwimmen zum Teil durch die Oberflächenspannung der Flüssigkeit 8 an der Oberfläche 9 bzw. sinken zum Boden 4 der Glasampulle 2 ab. Dadurch entsteht in der Flüssigkeit 8 nach einer geringen Wartezeit ein splitterfreier Bereich 19. Es ist allerdings auch möglich ein Filtermaterial im Lumen der Kanüle 14 anzubringen.

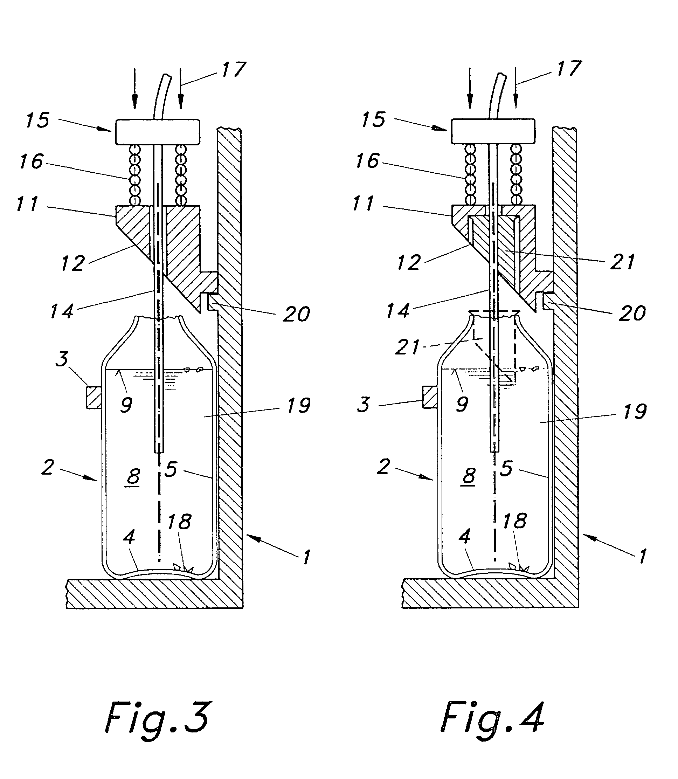

Nach dem das translatorische Element 11 an einem Anschlag 20 der Halterung 1 zur Anlage kommt, wird durch fortgesetzte Kraftausübung entlang der Pfeile 17 das Federelement 16 komprimiert, wodurch die Kanüle 14 des Entnahmeelementes 15 in die Glasampulle 2 bis in den splitterfreien Bereich 19 eingeführt wird. (Fig. 3) Die Flüssigkeit 8 kann dann durch eine hier nicht weiter dargestellte Saugeinrichtung aus der Glasampulle 2 entnommen werden. Durch den sehr rasch ablaufenden Vorgang ist gewährleistet, dass die aus dem splitterfreien Bereich 19 abgesaugte Flüssigkeit 8 durch die oberflächlich zutretende Umgebungsluft nicht verfälscht wird.

Bei der in Fig. 4 dargestellten Ausführungsvariante weist das translatorisch bewegbare Element 11 ein Dichtelement 21 auf, welches die Kanüle 14 umschließt und nach dem Abbrechen des Kopfes 7 der Ampulle 2 deren Halsbereich (siehe strichlierte Position) gasdicht verschließt. Die Verschiebung des Dichtelementes 21 entlang der Kanüle 14 erfolgt über hier nicht dargestellte Betätigungselemente. Bei dieser Variante entsteht durch die Entnahme der Flüssigkeit 8 ein Unterdruck in der Ampulle 2, sodass beim Herausziehen der Kanüle anhaftende Feinsplitter 18 durch den Unterdruck bzw. das Dichtelement 21 abgesaugt bzw. abgestreift werden.

## Patentansprüche

1. Vorrichtung zur automatischen Entnahme einer Flüssigkeit aus einer verschlossenen Glasampulle (2), wobei eine Halterung (1) vorgesehen ist, in welcher die verschlossene Glasampulle (2) angeordnet ist, wobei ein auf den Kopf (7) oder Hals (6) der Ampulle (2) einen seitlichen Druck oder Schlag ausübendes Element (11) vorgesehen ist, welches den Kopf (7) der Ampulle im Halsbereich bricht, **dadurch gekennzeichnet, dass** die Glasampulle (2) in der Öffnungs- und Entnahmeposition in einer aufrechten bzw. leicht geneigten, den Kopf (7) der Ampulle nach oben weisenden Stellung angeordnet ist, sowie dass ein in die Glasampulle in einen Bereich (19) zwischen Ampullenboden (4) und Flüssigkeitsoberfläche (9) einführbares Entnahmeelement (15) vorgesehen ist, welches eine Kanüle (14) zum Absaugen der Flüssigkeit aufweist.

2. Vorrichtung nach Anspruch 1, **dadurch gekennzeichnet, dass** die Kanüle (14) zum Absaugen der Flüssigkeit in einem translatorisch in Richtung der Achse (10) der Glasampulle (2) bewegbaren Element (11) geführt ist, welches eine schräge, seitlich auf den Kopf (7) der Ampulle (2) einwirkende Kontaktfläche (12) aufweist.

3. Vorrichtung nach Anspruch 2, **dadurch gekennzeichnet, dass** sich die Kanüle (14) am translatorisch bewegbaren Element (11) mittels eines Federelementes (16) abstützt, wobei nach Anlage des translatorisch bewegbaren Elementes (11) an einem Anschlag (20) die Kanüle (14) unter Überwindung der Federkraft in die Glasampulle (2) einbringbar ist.

4. Vorrichtung nach einem der Ansprüche 1 bis 3, **dadurch gekennzeichnet, dass** an der Spitze oder im Lumen der Kanüle (14) ein feinporiges Filter angeordnet ist.

5. Vorrichtung nach einem der Ansprüche 2 bis 4, **dadurch gekennzeichnet, dass** das translatorisch bewegbare Element (11) ein Dichtelement (21) aufweist, welches die Kanüle (14) umschließt und nach dem Abbrechen des Kopfes (7) der Ampulle (2) deren Halsbereich gasdicht verschließt.

## Claims

1. Device for automatic withdrawal of a liquid from a sealed glass ampoule 2, including a frame 1 in which the sealed glass ampoule 2 is held, an element 11 being provided, which will press or knock against the side of the tip 7 or neck 6 of the ampoule 2, thus breaking the tip 7 of the ampoule in the region of the neck 6, **characterized in that** the glass ampoule 2 is held upright or at a slightly inclined angle in the opening or withdrawing position, the tip 7 of the ampoule pointing upwards, and that a withdrawing element 15 is provided, which is designed for introduction into the glass ampoule 2 in an area 19 between the ampoule bottom 4 and the liquid surface 9, and which includes a cannula 14 for withdrawing the liquid.

2. Device according to claim 1, **characterized in that** the cannula 14 for liquid withdrawal is guided inside a translationally movable element 11 sliding in the direction of the axis 10 of the glass ampoule 2, which has a sloped contact face 12 acting on the side of the ampoule tip 7.

3. Device according to claim 2, **characterized in that** the cannula 14 is supported on the translationally movable element 11 by means of a spring element 16, the cannula 14 overcoming the force of the spring and being ready for introduction into the glass ampoule 2 once the translationally movable element 11 has arrived at a stop 20.

4. Device according to any of claims 1 to 3, **characterized in that** a fine-pored- filter is provided at the point or in the lumen of the cannula 14.

5. Device according to any of claims 2 to 4, **characterized in that** the translationally movable element 11 includes a sealing element 21, which surrounds the cannula 14 and provides a gas-tight seal of the neck region of the ampoule 2 once its tip 7 has been broken off.

## Revendications

1. Dispositif permettant un prélèvement automatique d'un liquide depuis une ampoule fermée en verre (2), comprenant un support (1) sur lequel est placée l'ampoule fermée en verre (2) et un élément (11) capable d'appliquer latéralement sur la tête (7) ou le cou (6) de l'ampoule (2) une pression ou un choc qui permet de détacher la tête (7) de l'ampoule dans la région du cou, **caractérisé en ce que** l'ampoule en verre (2), lorsqu'elle est dans la position d'ouverture et de prélèvement, se trouve dans une position située verticalement ou légèrement en biais au-dessus de la tête (7) de l'ampoule, et **en ce que** l'on prévoit un élément de prélèvement (15) qui peut être introduit dans l'ampoule en verre jusqu'à une région (19) entre le fond (4) de l'ampoule et la surface (9) du liquide et qui est pourvu d'une canule (14) pour aspirer le liquide.

2. Dispositif selon la revendication 1, **caractérisé en ce que** la canule (14) pour aspirer le liquide est guidée par un élément mobile (11) qui est capable d'un mouvement de translation suivant la direction de l'axe (10) de l'ampoule en verre (2) et qui comporte une surface de contact en biais (12) agissant latéralement sur la tête (7) de l'ampoule (2).

3. Dispositif selon la revendication 2, **caractérisé en ce que** la canule (14) repose sur l'élément (11) capable d'un mouvement de translation par l'intermédiaire d'un élément de ressort (16) et qu'après l'arrivée de l'élément (11) capable d'un mouvement de translation sur une butée (20), la canule (14) peut être introduite dans l'ampoule en verre (2) en surmontant la force exercée par le ressort.

4. Dispositif selon l'une des revendications 1 à 3, **caractérisé en ce que** l'on prévoit un filtre à pores fins à la pointe ou plus à l'intérieur de la canule (14).

5. Dispositif selon l'une des revendications 2 à 4, **caractérisé en ce que** l'élément (11) capable d'un mouvement de translation comporte un élément d'étanchéité (21) entourant la canule (14) et fermant la région du cou d'une manière étanche aux gaz après la rupture du cou (7) de l'ampoule (2).
